# EUROPEAN PATENT APPLICATION

(11) **EP 2 637 090 A2**
(43) Date of publication of application: **11.09.2013**
(21) Application number: 13158304.9
(22) Date of filing: 08.03.2013
(51) Int. Cl.: G06F 3/0488

(54) **Apparatus and method for providing a shortcut service in an electronic device**

(30) Priority: 08.03.2012 KR 20120023973
(71) Applicant: Samsung Electronics Co., Ltd, Gyeonggi-do 443-742 (KR)
(72) Inventor: Lee, Kiwon, Seoul (KR)
(74) Representative: Hylarides, Paul Jacques

(57) **Abstract**

An apparatus and method for providing a shortcut service in an electronic device. A method for providing a shortcut service for service execution in an electronic device includes, when a shortcut service button input and a shortcut service gesture are sensed, confirming a service mapped to the shortcut service button and the shortcut service gesture, and executing the service mapped to the shortcut service button and the shortcut service gesture.

## Description

### TECHNICAL FIELD OF THE INVENTION

The present invention relates generally to electronic devices, and more particularly, to an apparatus and method for providing a shortcut service in an electronic device.

### BACKGROUND OF THE INVENTION

With a increase of users of electronic devices, service providers of these electronic devices provide various services to secure more users. For example, the electronic devices provide, additionally to general calling function, various applications such as electronic schedulers, internet searching tools, digital multimedia broadcasting reception tools, streaming services, video play devices, games, and the like.

When the user of the electronic device converts an application executing into a different application, the user has to manipulate the electronic device multiple times to execute the different application. For example, when the user of the electronic device requires Internet search services during the use of a video play application, the user typically needs to manipulate the device multiple times for selecting and executing an Internet search application after ending the video play application.

Also, the user of the electronic device sets a control mode of wireless Internet settings, Bluetooth settings, location-based service settings, automatic screen rotation settings, and the like through multiple iterations. For example, in a case where the user of the electronic device will do the automatic screen rotation settings when the video play application is executing, the user often has to again execute the video play application after executing a quick panel and performing the automatic screen rotation settings.

Accordingly, there exists a need for a user interface configured to easily execute an application desired by a user and easily apply control mode settings in an electronic device.

### SUMMARY OF THE INVENTION

To address the above-discussed deficiencies of the prior art, it is a primary object to provide at least the advantages below. Accordingly, one aspect of the present invention is to provide an apparatus and method for providing a shortcut service in an electronic device.

Another aspect of the present invention is to provide an apparatus and method for providing an application executing shortcut service in an electronic device.

A further aspect of the present invention is to provide an apparatus and method for providing an application running shortcut service according to a shortcut service button and a shortcut service gesture in an electronic device.

Yet another aspect of the present invention is to provide an apparatus and method for providing a control mode settings shortcut service in an electronic device.

Still another aspect of the present invention is to provide an apparatus and method for providing a control mode settings shortcut service according to a shortcut service button and a shortcut service gesture in an electronic device.

The above aspects are achieved by providing an apparatus and method for providing a shortcut service in an electronic device.

According to one aspect of the present invention, a method for providing a shortcut service for service execution in an electronic device is provided. The method includes, when a shortcut service button input and a shortcut service gesture are sensed, confirming a service mapped to the shortcut service button and the shortcut service gesture, and executing the service mapped to the shortcut service button and the shortcut service gesture.

According to another aspect of the present invention, an apparatus for providing a shortcut service for service execution in an electronic device is provided. The apparatus includes an input unit including at least one button, a sensing module configured to sense a motion of the electronic device, and a controller configured to, when a shortcut service button input and a shortcut service gesture are sensed through the input unit and the sensing module, execute a service mapped to the shortcut service button and the shortcut service gesture.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example electronic device according example embodiments of the present invention;

FIGURE 2 illustrates an example procedure for setting an application running shortcut service in an electronic device according to an example embodiment of the present invention;

FIGURE 3 illustrates an example screen configuration for setting an application running shortcut service in an electronic device according to an example embodiment of the present invention;

FIGURE 4 illustrates an example procedure for providing an application running shortcut service in an electronic device according to an example embodiment of the present invention;

FIGURE 5 illustrates an example screen configuration for providing an application running shortcut service according to a left/right gesture in an electronic device according to an example embodiment of the present invention;

FIGURE 6 illustrates an example screen configuration for providing an application running shortcut service according to an up/down gesture in an electronic device according to an example embodiment of the present invention;

FIGURE 7 illustrates an example screen configuration for providing an application running shortcut service according to a wind blowing gesture in an electronic device according to an example embodiment of the present invention;

FIGURE 8 illustrates an example procedure for setting a control mode settings shortcut service in an electronic device according to an example embodiment of the present invention;

FIGURE 9 illustrates an example screen configuration for setting a control mode settings shortcut service in an electronic device according to an example embodiment of the present invention;

FIGURE 10 illustrates an example procedure for providing a control mode settings shortcut service in an electronic device according to an example embodiment of the present invention;

FIGURE 11 illustrates an example screen configuration for providing a control mode settings shortcut service according to a left/right gesture in an electronic device according to an example embodiment of the present invention;

FIGURE 12 illustrates an example screen configuration for providing a control mode settings shortcut service according to an up/down gesture in an electronic device according to an example embodiment of the present invention;

FIGURE 13 illustrates an example screen configuration for providing a control mode settings shortcut service according to a wind blowing gesture in an electronic device according to an example embodiment of the present invention;

FIGURE 14 illustrates an example procedure for providing an application running shortcut service in an electronic device being operating in a standby mode according to an example embodiment of the present invention;

FIGURE 15 illustrates an example screen configuration for providing an application running shortcut service in an electronic device being operating in a standby mode according to an example embodiment of the present invention;

FIGURE 16 illustrates an example screen configuration for providing an application running shortcut service in an electronic device being operating in a standby mode according to an example embodiment of the present invention;

FIGURE 17 illustrates an example procedure for providing a control mode settings shortcut service in an electronic device being operating in a standby mode according to an example embodiment of the present invention;

FIGURE 18 illustrates an example screen configuration for providing a control mode settings shortcut service in an electronic device being operating in a standby mode according to an example embodiment of the present invention; and

FIGURE 19 illustrates an example screen configuration for providing a control mode settings shortcut service in an electronic device being operating in a standby mode according to an example embodiment of the present invention.

### DETAILED DESCRIPTION OF THE INVENTION

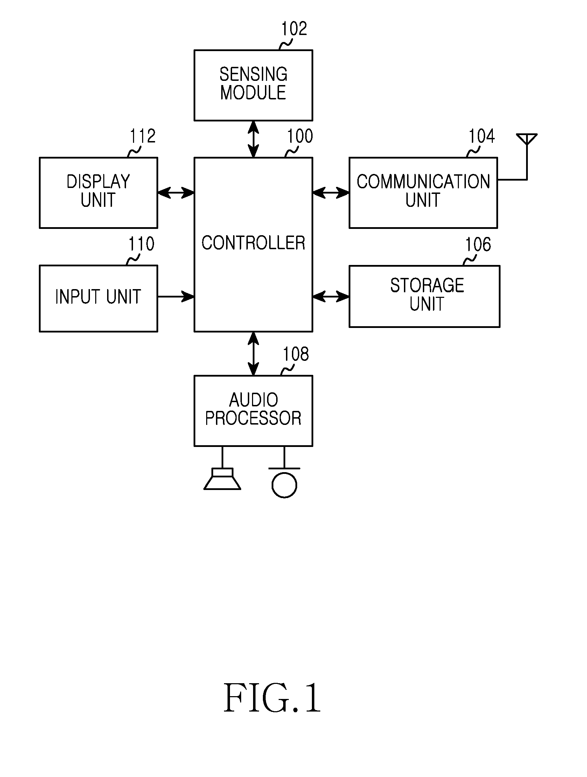

FIGURES 1 through 19, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. In the following description, well-known functions or constructions are not described in detail since they would obscure the invention in unnecessary detail. And, terms described below, which are defined considering functions in the present invention, can be different depending on user and operator's intention or practice. Therefore, the terms should be defined on the basis of the disclosure throughout this specification.

Below, the present invention describes a system and method for providing a shortcut service for service execution in an electronic device.

In the following description, the shortcut service for service execution includes an application running shortcut service and a control mode settings shortcut service. Here, an application may include a phonebook, a game, a short message service, a multimedia message service, an electronic mail (e-mail), a morning wake-up call, a MPEG-1 Audio Layer 3 (MP3), a schedule management, a camera, a wireless Internet service, and the like. Also, control mode settings include wireless Internet settings, Bluetooth settings, location-based service settings, automatic screen rotation settings, and the like.

In the following description, the electronic device can include a mobile communication terminal, a smartphone, a Personal Digital Assistant (PDA), a Mobile Internet Device (MID), a laptop, an Ultra Mobile Personal Computer (UMPC), a tablet PC, a netbook, a navigation, an MP3, a Portable Multimedia Player (PMP) and the like.

FIGURE 1 illustrates an example electronic device according to the present invention.

As illustrated in FIGURE 1, the electronic device includes a controller 100, a sensing module 102, a communication unit 104, a storage unit 106, an audio processor 108, an input unit 110, and a display unit 112.

The controller 100 controls the whole operation of the electronic device.

The controller 100 controls to set a shortcut service for service execution in the electronic device. For example, when a shortcut service settings event occurs, the controller 100 sets a shortcut service button, a shortcut service gesture, and a service to map to the shortcut service button and the shortcut service gesture. For another example, when a shortcut service button is preset, the controller 100 can set a shortcut service gesture, and a service to map to the preset shortcut service button and the shortcut service gesture. For another example, when a short service gesture is preset, the controller 100 may set a shortcut service button, and a service to map to the shortcut service button and the preset shortcut service gesture. For another example, when a shortcut service button and a shortcut service gesture are preset, the controller 100 may set a service to map to the preset shortcut service button and the preset shortcut service gesture. Here, the shortcut service button represents at least one hardware or software button. Also, the shortcut service gesture represents at least one gesture information of the electronic device configured to map a service for providing a shortcut service.

The controller 100 provides a shortcut service for service execution in the electronic device. For example, when a shortcut service button and a shortcut service gesture are sensed, the controller 100 runs an application mapped to the shortcut service button and the shortcut service gesture or sets a control mode. For another example, the controller 100 may provide a shortcut service for service execution, such as, for example, when being operating in a standby mode.

The sensing module 102 senses a gesture of the electronic device. For example, the sensing module 102 includes at least one of an acceleration sensor, a geomagnetic sensor, and a gyroscope, and an altitude sensor, and senses a gesture of the electronic device.

The communication unit 104 processes a signal transceived through an antenna, for voice and data communication.

The storage unit 106 can be composed of a program storage unit 114 for storing a program for controlling an operation of the electronic device and a data storage unit for storing data generated during program execution. For example, the data storage unit stores shortcut service settings information for application running according to control of the controller 100. Here, the shortcut service settings information for application running represents a shortcut service button, a shortcut service gesture, and application information mapped to the shortcut service button and the shortcut service gesture. Also, the data storage unit stores shortcut service settings information for control mode settings according to control of the controller 100. Here, the shortcut service settings information for control mode settings represents a shortcut service button, a shortcut service gesture, and control mode settings information mapped to the shortcut service button and the shortcut service gesture. For another example, the program storage unit 114 may store an instruction set or program as a set of instructions for providing a shortcut service in the controller 100.

The audio processor 108 controls input/output of an audio signal. For example, the audio processor 108 transmits an audio signal provided from the controller 100, to the external through a speaker, and provides an audio signal provided from a microphone, to the controller 100.

The input unit 110 provides input data generated by user's selection to the controller 100. For example, the input unit 110 includes a button for control of the electronic device. Here, the button for control represents a power button, a home button, and a volume adjustment button. For another example, the input unit 110 may include a keypad for receiving input data from a user, separately from the display unit 112.

The display unit 112 performs a function of information display. Accordingly, the display unit 112 displays state information of the electronic device, a character inputted by a user, a moving picture, a still picture and the like according to control of the controller 100. When the display unit 112 is composed of a touch screen, the display unit 112 may include a function of an input means besides the information display. A touch sensitive display, called as a touch screen, may be used as the display unit 112. In this situation, a touch input may be performed via the touch sensitive display.

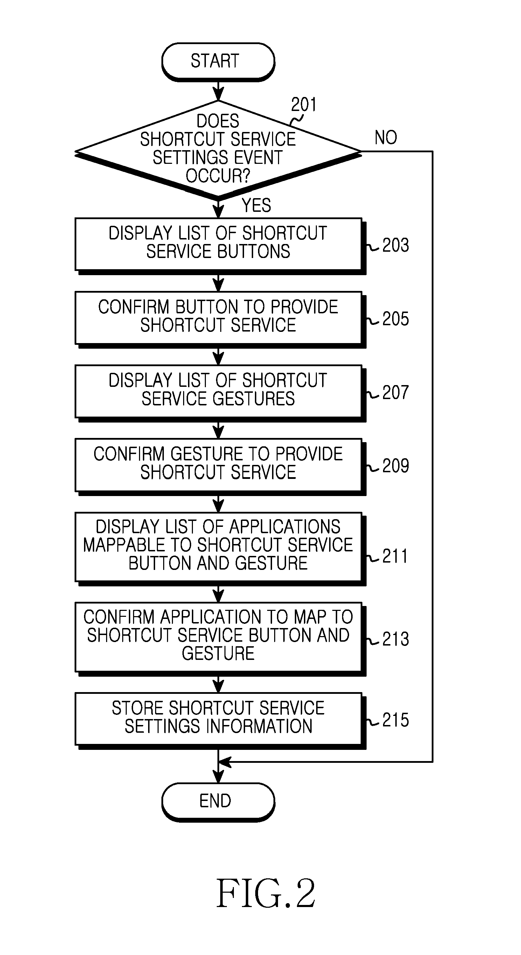

FIGURE 2 illustrates an example procedure for setting an application running shortcut service in an electronic device according to an example embodiment of the present invention. Here, it is assumed that the electronic device sets a shortcut service button for an application running shortcut service, a shortcut service gesture therefor, and application information to map to the shortcut service button and the shortcut service gesture.

Referring to FIGURE 2, in step 201, the electronic device determines if a shortcut service settings occurs. For example, the electronic device determines if a menu for setting a shortcut service is selected.

When it is determined in step 201 that the shortcut service settings event does not occur, the electronic device terminates the algorithm according to the present invention.

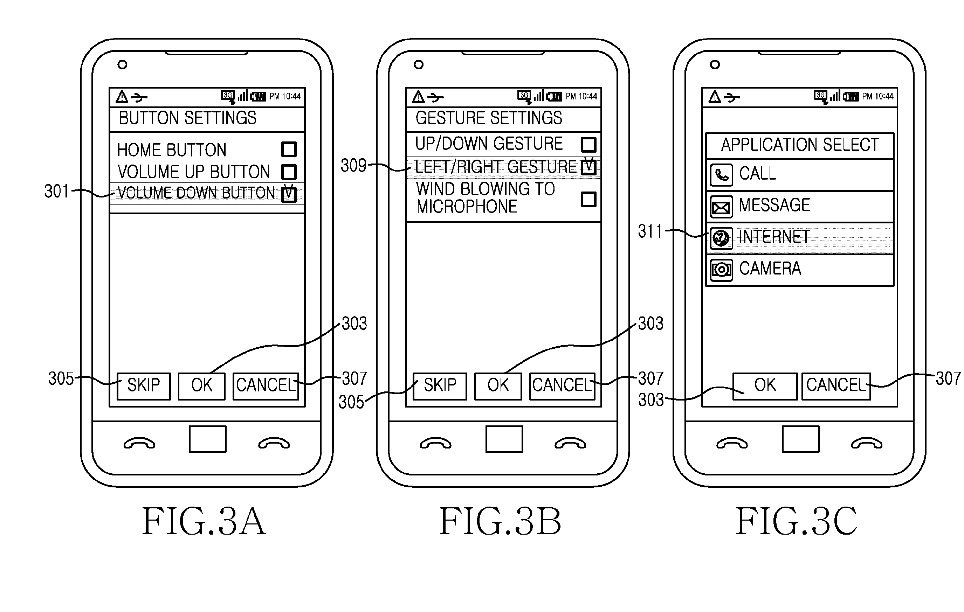

Alternatively, when it is determined in step 201 that the shortcut service settings event occurs, the electronic device proceeds to step 203 and displays a list of shortcut service buttons. For example, as illustrated in FIGURE 3A, the electronic device displays a home button, a volume up button, and a volume down button, which are usable as the shortcut service buttons, among hardware buttons included in the input unit 110, on the display unit 112. For another example, when the display unit 112 includes a touch screen, the electronic device may display at least one software button, which is usable as the shortcut service button, among multiple software buttons displayable on the touch screen of the display unit 112.

After displaying the list of shortcut service buttons in step 203, the electronic device proceeds to step 205 and confirms a button to provide a shortcut service. For example, as illustrated in FIGURE 3A, after a volume down button (301) is selected from among a list of buttons usable as shortcut service buttons, if an OK button (303) is inputted, the electronic device recognizes the volume down button (301) as the shortcut service button. For another example, as illustrated in FIGURE 3A, if the volume down button (301) is selected in the list of buttons usable as the shortcut service buttons, the electronic device may recognize the volume down button (301) as the shortcut service button. If a skip button (305) is inputted in a shortcut service button settings screen, the electronic device recognizes that it does not set the shortcut service button. Accordingly, as illustrated in FIGURE 3B, the electronic device converts the shortcut service button settings screen into a shortcut service gesture settings screen. In an example embodiment, the electronic device recognizes a preset shortcut service button as the shortcut service button to provide the shortcut service. Also, if a cancel button (307) is inputted in the shortcut service button settings screen, the electronic device recognizes that it stops shortcut service settings.

After confirming the button to provide the shortcut service in step 205, the electronic device proceeds to step 207 and displays a list of shortcut service gestures. For example, as illustrated in FIGURE 3B, the electronic device displays an up/down gesture, a left/right gesture, and a wind blowing gesture, which are usable as shortcut service gestures, on the display unit 112.

After displaying the list of shortcut service gestures in step 207, the electronic device proceeds to step 209 and confirms a gesture to provide a shortcut service. For example, as illustrated in FIGURE 3B, after a left/right gesture (309) is selected in the list of gestures usable as the shortcut service gestures, if the OK button (303) is inputted, the electronic device recognizes the left/right gesture (309) as the shortcut service gesture. For another example, as illustrated in FIGURE 3B, if the left/right gesture (309) is selected in the list of gestures usable as the shortcut service gestures, the electronic device may recognize the left/right gesture (309) as the shortcut service gesture. If the skip button (305) is inputted in the shortcut service gesture settings screen, the electronic device recognizes that it does not set the shortcut service gesture. Accordingly, as illustrated in FIGURE 3C, the electronic device converts the shortcut service gesture settings screen into an application settings screen to map to the shortcut service button and the shortcut service gesture. In an example embodiment, the electronic device recognizes a preset shortcut service gesture as the shortcut service gesture to provide the shortcut service. Also, when the cancel button (307) is inputted in the shortcut service gesture settings screen, the electronic device recognizes that it stops the shortcut service settings.

After confirming the gesture to provide the shortcut service in step 209, the electronic device proceeds to step 211 and displays a list of applications that are mappable to the shortcut service button and the shortcut service gesture, on the display unit 112. For example, as illustrated in FIGURE 3C, the electronic device displays a call application, a message application, an Internet application, and a camera application, which are mappable to the shortcut service button and the shortcut service gesture, on the display unit 112.

After displaying the list of applications that are mappable to the shortcut service button and the shortcut service gesture in step 211, the electronic device proceeds to step 213 and confirms an application to map to the shortcut service button and the shortcut service gesture. For example, as illustrated in FIGURE 3C, after an Internet application (311) is selected in the list of applications mappable to the shortcut service button and the shortcut service gesture, if the OK button (303) is inputted, the electronic device recognizes the Internet application (311) as the application to map to the shortcut service button and the shortcut service gesture. For another example, as illustrated in FIGURE 3C, if the Internet application (311) is selected in the list of applications mappable to the shortcut service button and the shortcut service gesture, the electronic device may recognize the Internet application (311) as the application to map to the shortcut service button and the shortcut service gesture. If the cancel button (307) is inputted in the application settings screen to map to the shortcut service button and the shortcut service gesture, the electronic device recognizes that it stops the shortcut service settings.

After confirming the application to map to the shortcut service button and the shortcut service gesture in step 213, the electronic device proceeds to step 215 and stores shortcut service settings information. For example, as illustrated in FIGURE 3C, if the OK button (303) is input, the electronic device recognizes that application running shortcut service settings are completed. Accordingly, the electronic device stores the shortcut service settings information in the storage unit 106.

Next, the controller 100 terminates the algorithm according to the present invention.

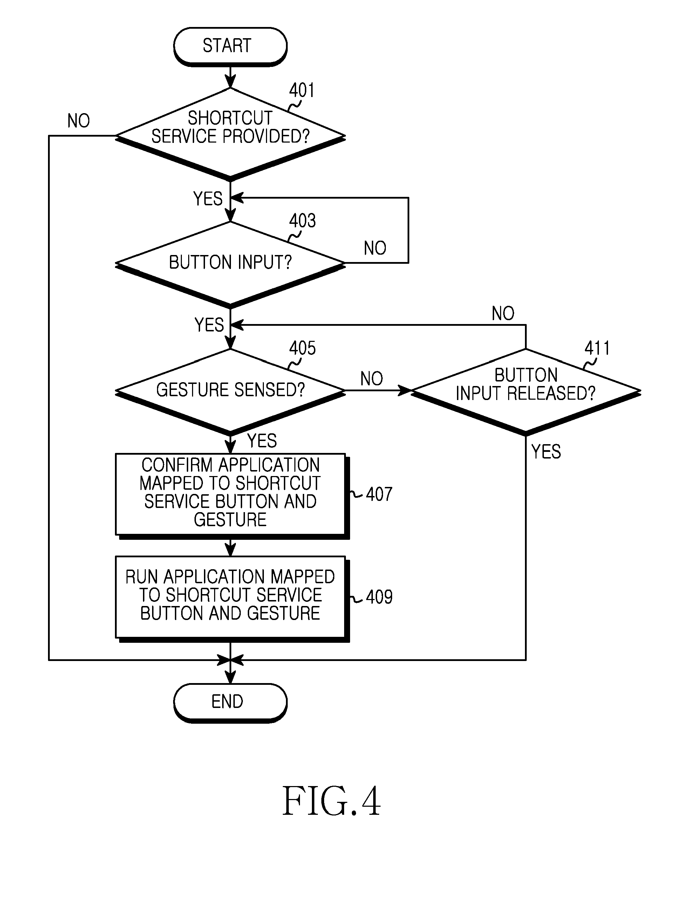

As described above, when a user sets an application running shortcut service in an electronic device, the electronic device can provide the application running shortcut service as illustrated in FIGURE 4 below.

FIGURE 4 illustrates an example procedure for providing an application running shortcut service in an electronic device according to an example embodiment of the present invention.

Referring to FIGURE 4, in step 401, the electronic device determines if it provides an application running shortcut service. For example, the electronic device determines if a menu for providing the application running shortcut service has been set.

When it is determined in step 401 that it does not provide the application running shortcut service, the electronic device terminates the algorithm according to the present invention.

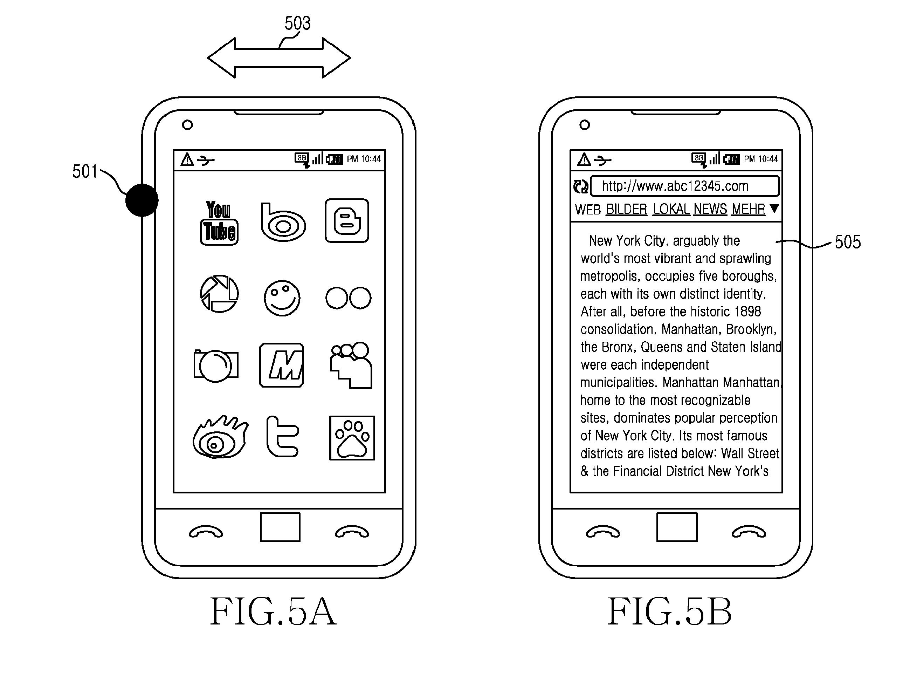

Alternatively, when it is determined in step 401 that it provides the application running shortcut service, the electronic device proceeds to step 403 and determines if a shortcut service button is inputted. For example, the electronic device determines if a volume up button (501), (601), or (701) is inputted among at least one shortcut service button as illustrated in FIGURE 5A, FIGURE 6A, or FIGURE 7A.

When it is determined in step 403 that the shortcut service button is not inputted, the electronic device again determines if the shortcut service button is inputted.

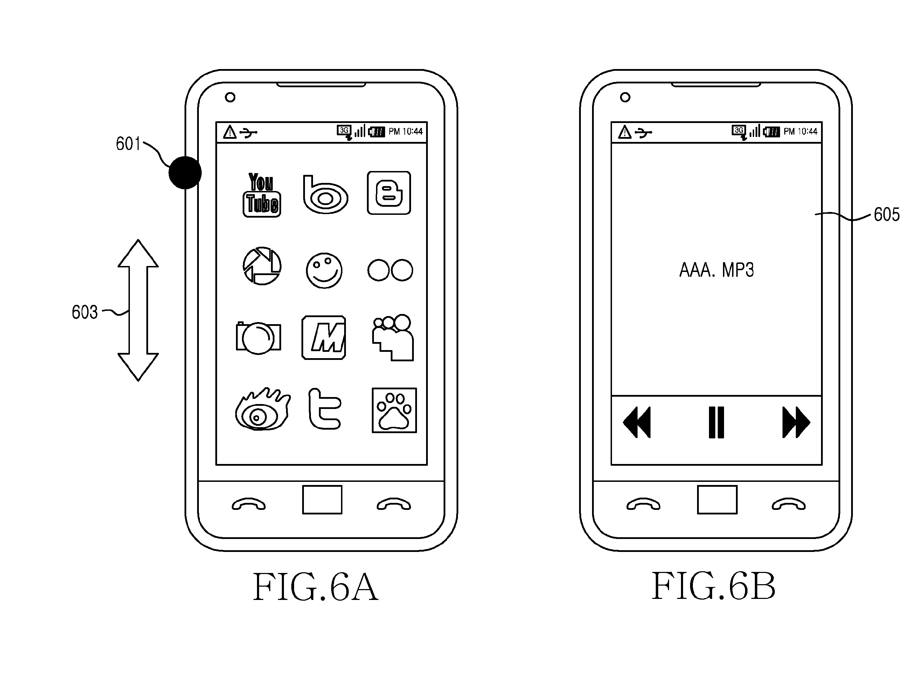

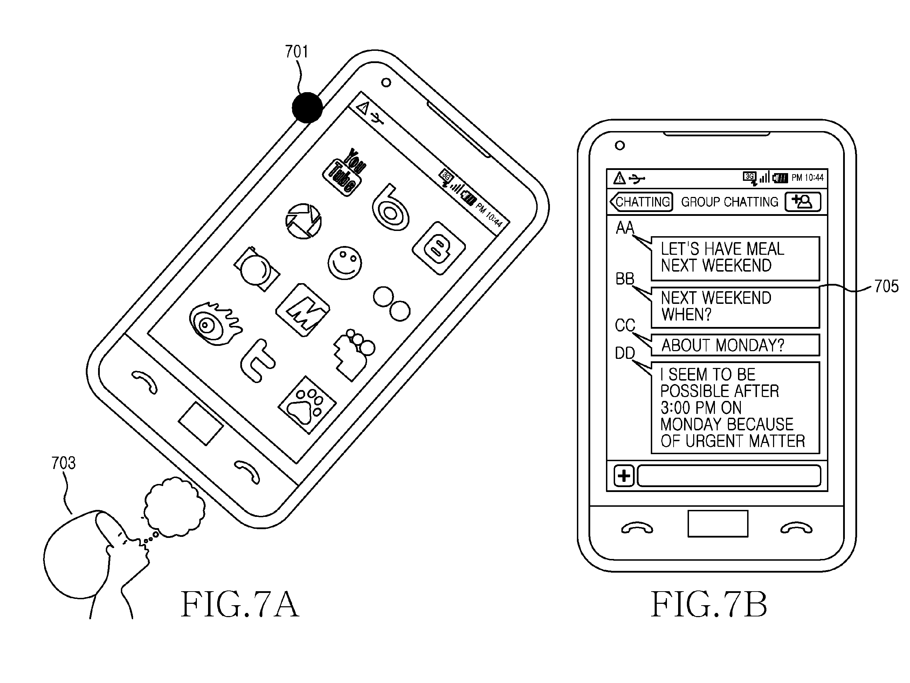

Alternatively, when it is determined in step 403 that the shortcut service button is inputted, the electronic device proceeds to step 405 and determines if a shortcut service gesture is sensed. For example, as illustrated in FIGURE 5A, the electronic device determines if a left/right gesture (503) is sensed among at least one shortcut service gesture. For another example, as illustrated in FIGURE 6A, the electronic device determines if an up/down gesture (603) is sensed among the at least one shortcut service gesture. For further another example, as illustrated in FIGURE 7A, the electronic device determines if a wind blowing gesture (703) is sensed among the at least one shortcut service gesture.

When it is determined in step 405 that the shortcut service gesture is not sensed, the electronic device proceeds to step 411 and determines if the shortcut service button input is released.

When it is determined in step 411 that the shortcut service button input is released, the electronic device recognizes that it does not use a shortcut service. Accordingly, the electronic device terminates the algorithm according to the present invention.

Alternatively, when it is determined in step 411 that the shortcut service button input is not released, the electronic device returns to step 405 and again determines if the shortcut service gesture is sensed.

Alternatively, when it is determined in step 405 that the shortcut service gesture is sensed, the electronic device proceeds to step 407 and confirms an application mapped to the shortcut service button and the shortcut service gesture.

Next, the electronic device proceeds to step 409 and executes the application mapped to the shortcut service button and the shortcut service gesture. Accordingly, the electronic device displays a running screen of the application mapped to the shortcut service button and the shortcut service gesture, on the display unit 112. For example, when the volume up button (501) is inputted and the left/right gesture (503) is sensed as illustrated in FIGURE 5A, the electronic device executes an Internet application (505) mapped to the volume up button (501) and the left/right gesture (503) as illustrated in FIGURE 5B. For another example, when the volume up button (601) is inputted and the up/down gesture (603) is sensed as illustrated in FIGURE 6A, the electronic device executes a media play application (605) mapped to the volume up button (601) and the up/down gesture (603) as illustrated in FIGURE 6B. For further another example, when the volume up button (701) is inputted and the wind blowing gesture (703) is sensed as illustrated in FIGURE 7A, the electronic device may execute a message application (705) mapped to the volume up button (701) and the wind blowing gesture (703) as illustrated in FIGURE 7B.

Next, the electronic device terminates the algorithm according to the present invention.

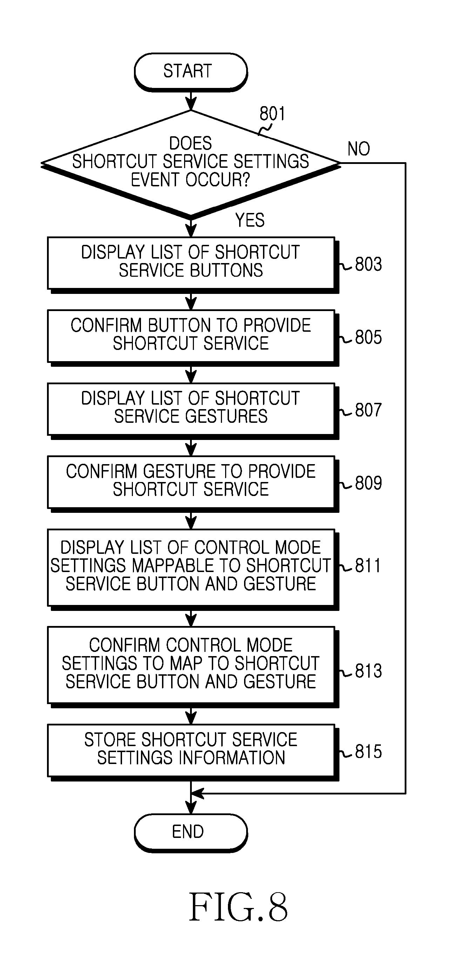

FIGURE 8 illustrates a procedure for setting a control mode settings shortcut service in an electronic device according to an example embodiment of the present invention. Here, it is assumed that the electronic device sets a shortcut service button for a control mode settings shortcut service, a shortcut service gesture therefor, and control mode settings information to map to the shortcut service button and the shortcut service gesture.

Referring to FIGURE 8, in step 801, the electronic device determines if a shortcut service settings event takes place. For example, the electronic device determines if a menu for setting a shortcut service is selected.

When it is determined in step 801 that the shortcut service settings event does not occur, the electronic device terminates the algorithm according to the present invention.

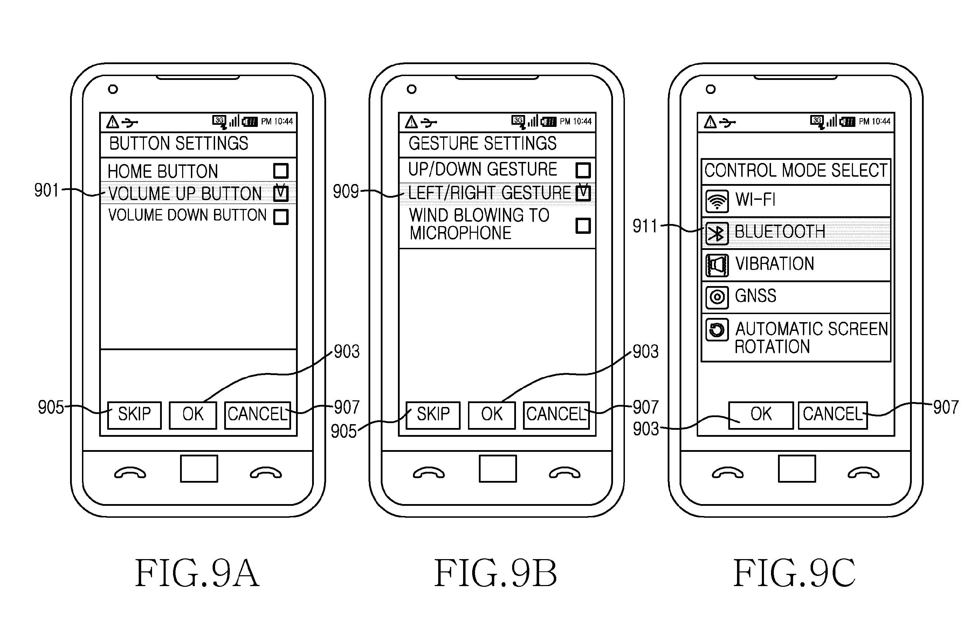

Alternatively, when it is determined in step 801 that the shortcut service settings event occurs, the electronic device proceeds to step 803 and displays a list of shortcut service buttons. For example, as illustrated in FIGURE 9A, the electronic device displays a home button, a volume up button, and a volume down button, which are usable as shortcut service buttons, among hardware buttons included in the input unit 110, on the display unit 112. For another example, when the display unit 112 is composed of a touch screen, the electronic device may display at least one software button, which is usable as the shortcut service button, among software buttons displayable on the touch screen, on the display unit 112.

After displaying the list of shortcut service buttons in step 803, the electronic device proceeds to step 805 and confirms a button to provide a shortcut service. For example, as illustrated in FIGURE 9A, after a volume up button (901) is selected in a list of buttons usable as shortcut service buttons, if an OK button (903) is inputted, the electronic device recognizes the volume up button (901) as the shortcut service button. For another example, as illustrated in FIGURE 9A, if the volume up button (901) is selected in the list of buttons usable as the shortcut service buttons, the electronic device may recognize the volume up button (901) as the shortcut service button. If a skip button (905) is inputted in a shortcut service button settings screen, the electronic device recognizes that it does not set the shortcut service button. Accordingly, as illustrated in FIGURE 9B, the electronic device converts the shortcut service button settings screen into a shortcut service gesture settings screen. In an example embodiment, the electronic device recognizes a preset shortcut service button as the shortcut service button to provide the shortcut service. Also, if a cancel button (907) is inputted in the shortcut service button settings screen, the electronic device recognizes that it stops shortcut service settings.

After confirming the button to provide the shortcut service in step 805, the electronic device proceeds to step 807 and displays a list of shortcut service gestures. For example, as illustrated in FIGURE 9B, the electronic device displays an up/down gesture, a left/right gesture, and a wind blowing gesture, which are usable as shortcut service gestures, on the display unit 112.

After displaying the list of shortcut service gestures in step 807, the electronic device proceeds to step 809 and confirms a gesture to provide a shortcut service. For example, as illustrated in FIGURE 9B, after a left/right gesture (909) is selected in the list of gestures usable as the shortcut service gestures, if the OK button (903) is inputted, the electronic device recognizes the left/right gesture (909) as the shortcut service gesture. For another example, as illustrated in FIGURE 9B, if the left/right gesture (909) is selected in the list of gestures usable as the shortcut service gestures, the electronic device may recognize the left/right gesture (909) as the shortcut service gesture. If the skip button (905) is inputted in the shortcut service gesture settings screen, the electronic device recognizes that it does not set the shortcut service gesture. Accordingly, as illustrated in FIGURE 9C, the electronic device converts the shortcut service gesture settings screen into a control mode settings screen to map to the shortcut service button and the shortcut service gesture. In an example embodiment, the electronic device recognizes a preset shortcut service gesture as the shortcut service gesture to provide the shortcut service. Also, when the cancel button (907) is inputted in the shortcut service gesture settings screen, the electronic device recognizes that its stops the shortcut service settings.

After confirming the gesture to provide the shortcut service in step 809, the electronic device proceeds to step 811 and displays a list of control mode settings mappable to the shortcut service button and the shortcut service gesture. For example, as illustrated in FIGURE 9C, the electronic device displays wireless Internet settings, Bluetooth settings, vibration settings, GNSS settings, and screen automatic rotation settings, which are mappable to the shortcut service button and the shortcut service gesture, on the display unit 112.

After displaying the list of control mode settings mappable to the shortcut service button and the shortcut service gesture in step 811, the electronic device proceeds to step 813 and confirms control mode settings to map to the shortcut service button and the shortcut service gesture. For example, as illustrated in FIGURE 9C, after the Bluetooth settings (911) are selected in the list of control mode settings mappable to the shortcut service button and the shortcut service gesture, if the OK button (903) is inputted, the electronic device recognizes the Bluetooth settings (911) as the control mode settings to map to the shortcut service button and the shortcut service gesture. For another example, if the Bluetooth settings (911) are selected in the list of control mode settings mappable to the shortcut service button and the shortcut service gesture as illustrated in FIGURE 9C, the electronic device may recognize the Bluetooth settings (911) as the control mode settings to map to the shortcut service button and the shortcut service gesture. If the cancel button (907) is inputted in the control mode settings screen to map to the shortcut service button and the shortcut service gesture, the electronic device recognizes that it stops shortcut service settings.

After confirming the control mode settings to map to the shortcut service button and the shortcut service gesture in step 813, the electronic device proceeds to step 815 and stores shortcut service settings information. For example, if the OK button (903) is inputted as illustrated in FIGURE 9C, the electronic device recognizes that the control mode settings shortcut service settings are completed. Accordingly, the electronic device stores the shortcut service settings information in the storage unit 106.

Next, the controller 100 terminates the algorithm according to the present invention.

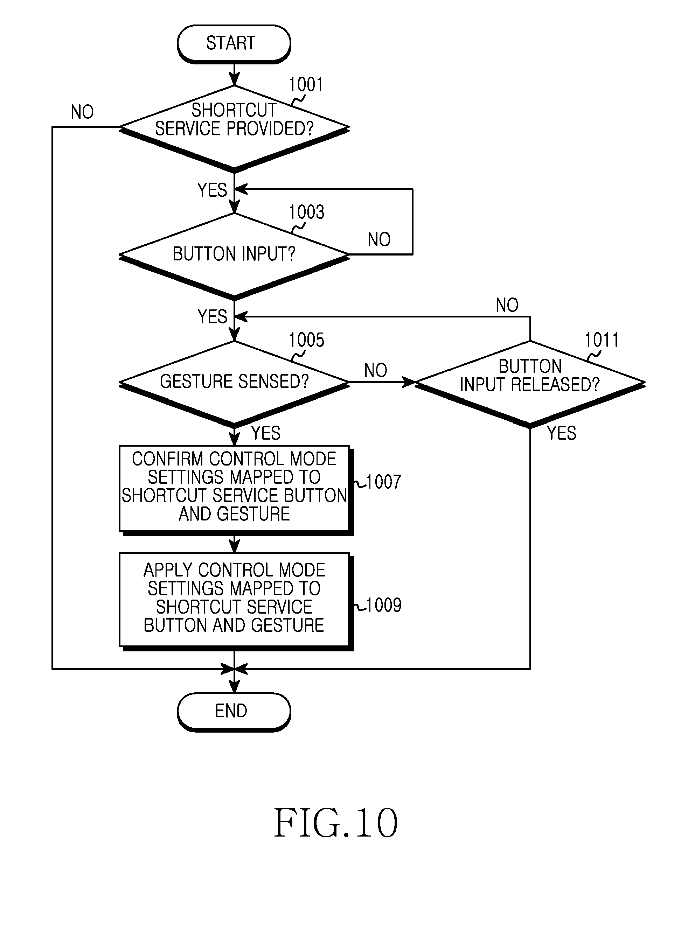

As described above, when a user sets a control mode settings shortcut service in an electronic device, the electronic device can provide the control mode settings shortcut service as illustrated in FIGURE 10 below.

FIGURE 10 illustrates an example procedure for providing a control mode settings shortcut service in an electronic device according to an example embodiment of the present invention.

Referring to FIGURE 10, in step 1001, the electronic device determines if it provides a control mode settings shortcut service. For example, the electronic device determines if a menu for providing the control mode settings shortcut service has been set.

When it is determined in step 1001 that it does not provide the control mode settings shortcut service, the electronic device terminates the algorithm according to the present invention.

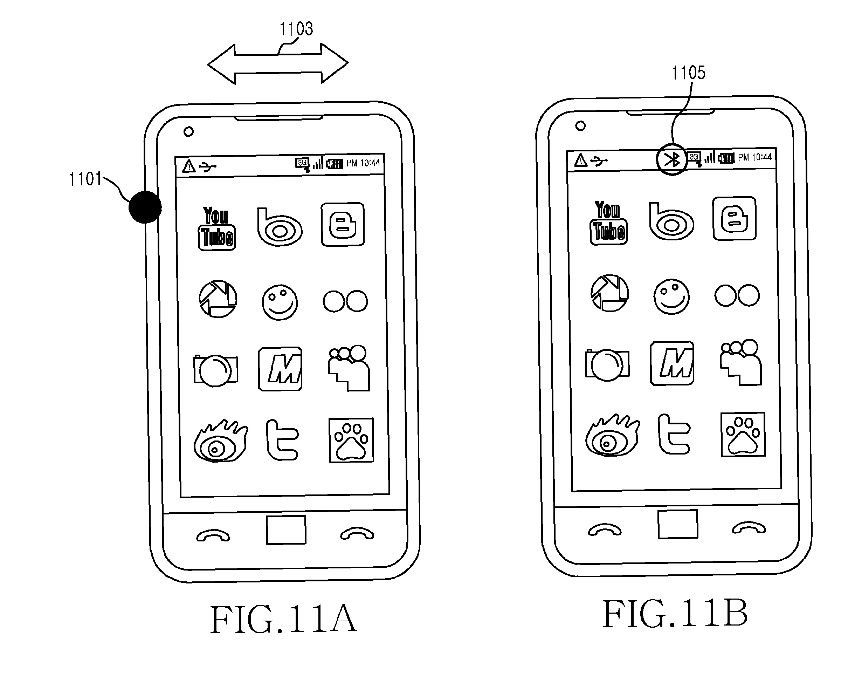

Alternatively, when it is determined in step 1001 that it provides the control mode settings shortcut service, the electronic device proceeds to step 1003 and determines if a shortcut service button is inputted. For example, the electronic device determines if a volume up button (1101), (1201), or (1301) is inputted among at least one shortcut service button as illustrated in FIGURE 11A, FIGURE 12A, or FIGURE 13A.

When it is determined in step 1003 that the shortcut service button is not inputted, the electronic device again determines if the shortcut service button is inputted.

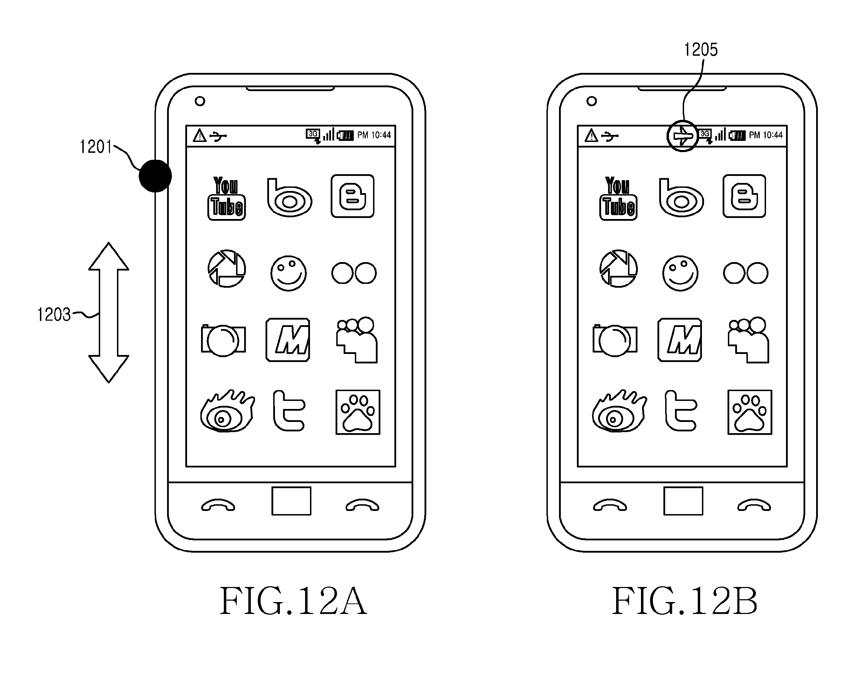

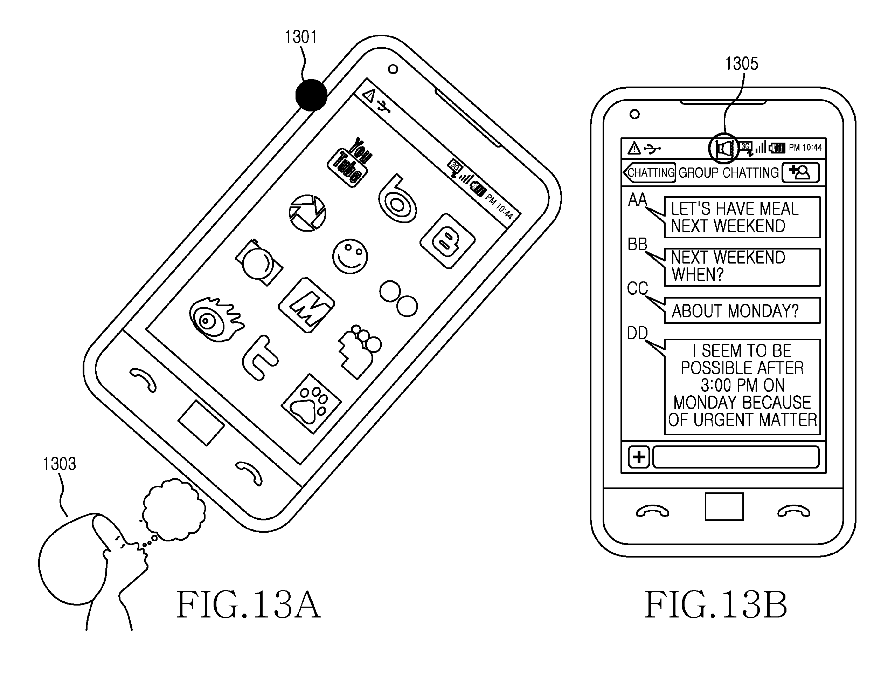

Alternatively, when it is determined in step 1003 that the shortcut service button is inputted, the electronic device proceeds to step 1005 and determines if a shortcut service gesture is sensed. For example, as illustrated in FIGURE 11A, the electronic device determines if a left/right gesture (1103) is sensed among at least one shortcut service gesture. For another example, as illustrated in FIGURE 12A, the electronic device determines if an up/down gesture (1203) is sensed among the at least one shortcut service gesture. For further another example, as illustrated in FIGURE 13A, the electronic device determines if a wind blowing gesture (1303) is sensed among the at least one shortcut service gesture.

When it is determined in step 1005 that the shortcut service gesture is not sensed, the electronic device proceeds to step 1011 and determines if the shortcut service button input is released.

When it is determined in step 1011 that the shortcut service button input is released, the electronic device recognizes that it does not use a shortcut service. Accordingly, the electronic device terminates the algorithm according to the present invention.

Alternatively, when it is determined in step 1011 that the shortcut service button input is not released, the electronic device returns to step 1005 and again determines if the shortcut service gesture is sensed.

Alternatively, when it is determined in step 1005 that the shortcut service gesture is sensed, the electronic device proceeds to step 1007 and confirms control mode settings mapped to the shortcut service button and the shortcut service gesture.

Next, the electronic device proceeds to step 1009 and applies the control mode settings mapped to the shortcut service button and the shortcut service gesture. Accordingly, the electronic device displays a control mode settings icon mapped to the shortcut service button and the shortcut service gesture, on the display unit 112. For example, when the volume up button (1101) is inputted and the left/right gesture (1103) is sensed as illustrated in FIGURE 11A, the electronic device applies Bluetooth settings (1105) mapped to the volume up button (1101) and the left/right gesture (1103) as illustrated in FIGURE 11B. For another example, when the volume up button (1201) is inputted and the up/down gesture (1203) is sensed as illustrated in FIGURE 12A, the electronic device can apply flight mode settings (1205) mapped to the volume up button (1201) and the up/down gesture (1203) as illustrated in FIGURE 12B. For further another example, when the volume up button (1301) is inputted and the wind blowing gesture (1303) is sensed as illustrated in FIGURE 13A, the electronic device may apply vibration mode settings (1305) mapped to the volume up button (1301) and the wind blowing gesture (1303) as illustrated in FIGURE 13B.

Next, the electronic device terminates the algorithm according to the present invention.

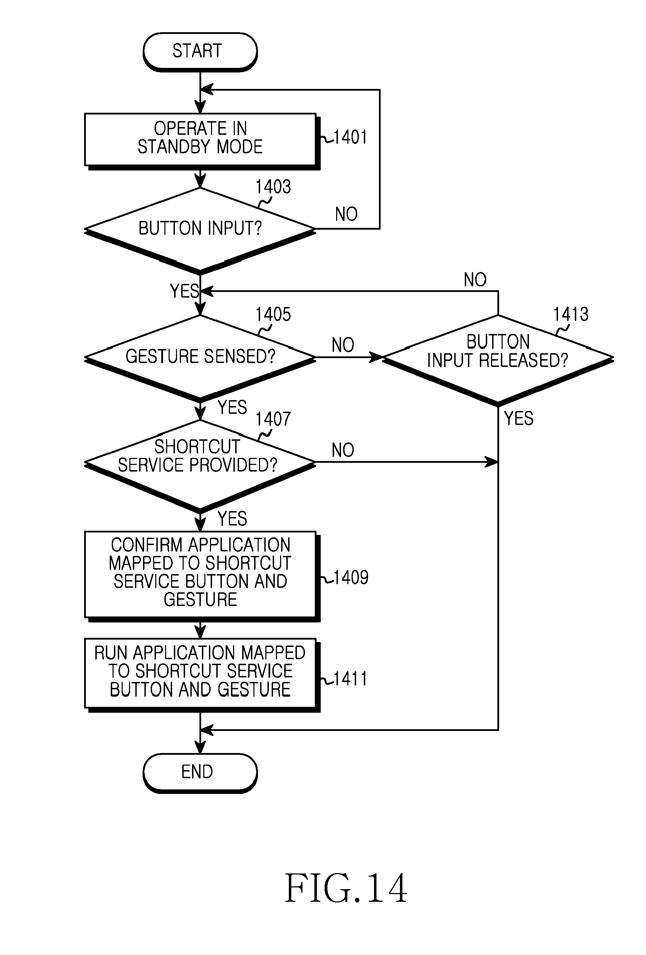

FIGURE 14 illustrates a procedure for setting an application running shortcut service in an electronic device being operating in a standby mode according to an example embodiment of the present invention.

Referring to FIGURE 14, in step 1401, the electronic device operates in a standby mode to minimize power consumption.

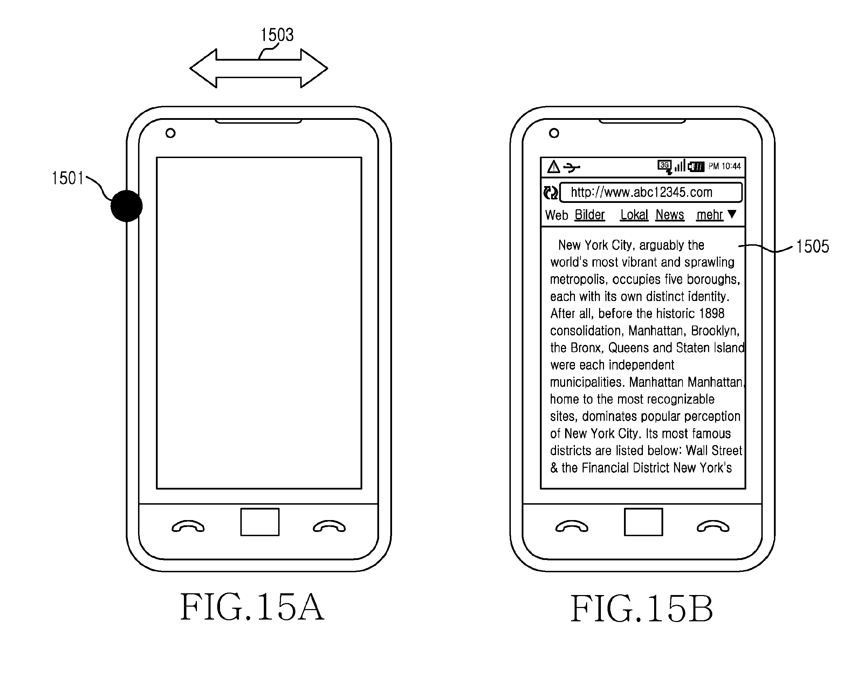

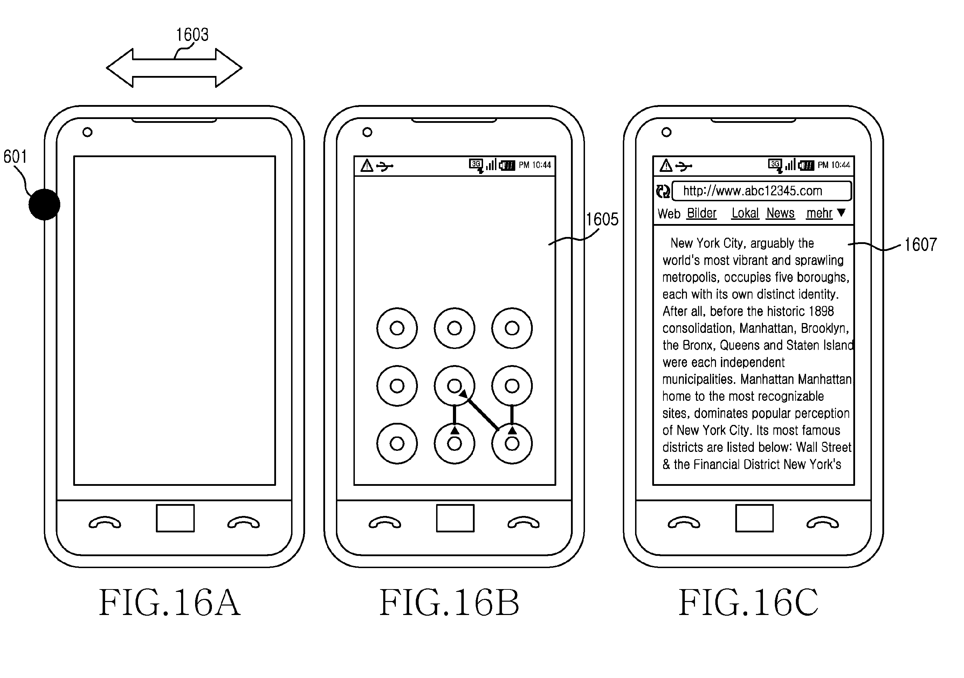

After that, the electronic device proceeds to step 1403 and determines if a shortcut service button is inputted when it is operating in the standby mode. For example, the electronic device determines if a volume up button (1501) or (1601) is inputted among at least one shortcut service button as illustrated in FIGURE 15A or FIGURE 16A.

When it is determined in step 1403 that the shortcut service button is not inputted, the electronic device returns to step 1401 and operates in the standby mode.

Alternatively, when it is determined in step 1403 that the shortcut service button is inputted, the electronic device proceeds to step 1405 and determines if a shortcut service gesture is sensed. For example, the electronic device determines if a left/right gesture (1503) or (1603) is sensed among at least one shortcut service gesture as illustrated in FIGURE 15A or FIGURE 16A.

When it is determined in step 1405 that the shortcut service gesture is not sensed, the electronic device proceeds to step 1413 and determines if the shortcut service button input is released.

When it is determined in step 1413 that the shortcut service button input is released, the electronic device recognizes that it does not use a shortcut service. Accordingly, the electronic device terminates the algorithm according to the present invention.

Alternatively, when it is determined in step 1413 that the shortcut service button input is not released, the electronic device returns to step 1405 and again determines if the shortcut service gesture is sensed.

Alternatively, when it is determined in step 1405 that the shortcut service gesture is sensed, the electronic device proceeds to step 1407 and determines if it provides an application running shortcut service. For example, the electronic device determines if a menu for providing the application running shortcut service has been set.

When it is determined in step 1407 that it does not provide the application running shortcut service, the electronic device terminates the algorithm according to the present invention.

Alternatively, when it is determined in step 1407 that it provides the application running shortcut service, the electronic device proceeds to step 1409 and confirms an application mapped to the shortcut service button and the shortcut service gesture.

Next, the electronic device proceeds to step 1411 and executes the application mapped to the shortcut service button and the shortcut service gesture. Accordingly, the electronic device displays a running screen of the application mapped to the shortcut service button and the shortcut service gesture, on the display unit 112. For example, when the volume up button (1501) is inputted and the left/right gesture (1503) is sensed as illustrated in FIGURE 15A, the electronic device executes an Internet application (1505) mapped to the volume up button (1501) and the left/right gesture (1503) as illustrated in FIGURE 15B. For another example, when the volume up button (1601) is inputted and the left/right gesture (1603) is sensed as illustrated in FIGURE 16A, the electronic device determines if it provides a privacy protection service. When providing the privacy protection service, the electronic device displays a privacy protection service screen (1605) on the display unit 112 as illustrated in FIGURE 16B. When the privacy protection service is unlocked, the electronic device can execute an Internet application (1607) mapped to the volume up button (1601) and the left/right gesture (1603) as illustrated in FIGURE 16C.

Next, the electronic device terminates the algorithm according to the present invention.

In the aforementioned example embodiment, the electronic device confirms an application mapped to a shortcut service button and a shortcut service gesture (step 1409) after determining if it provides an application running shortcut service (step 1407).

In another example embodiment, the electronic device may determine if it provides the application running shortcut service (step 1407), after confirming the application mapped to the shortcut service button and the shortcut service gesture (step 1409).

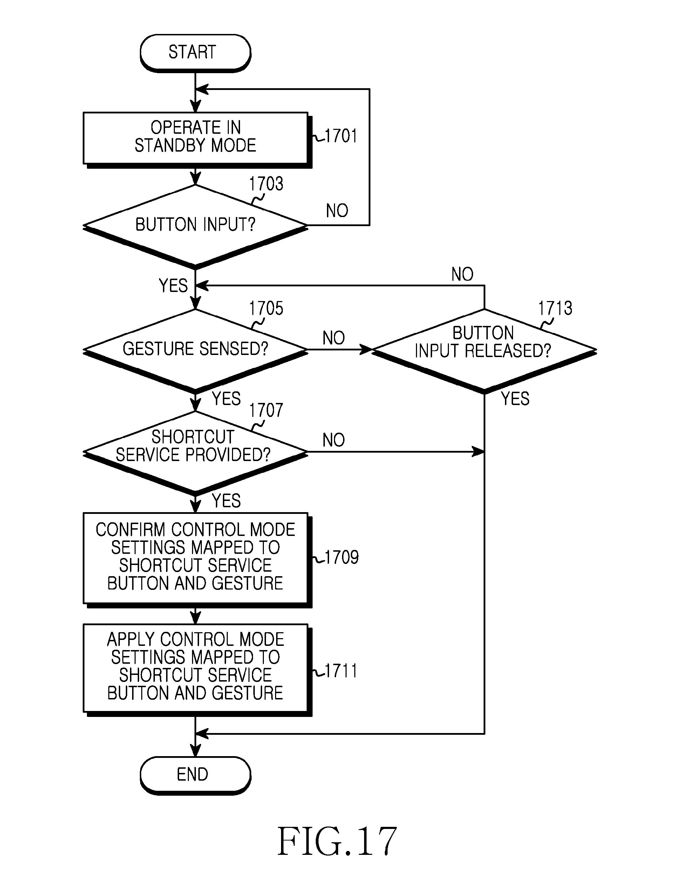

FIGURE 17 illustrates a procedure for providing a control mode settings shortcut service in an electronic device being operating in a standby mode according to an example embodiment of the present invention.

Referring to FIGURE 17, in step 1701, the electronic device operates in a standby mode to minimize power consumption.

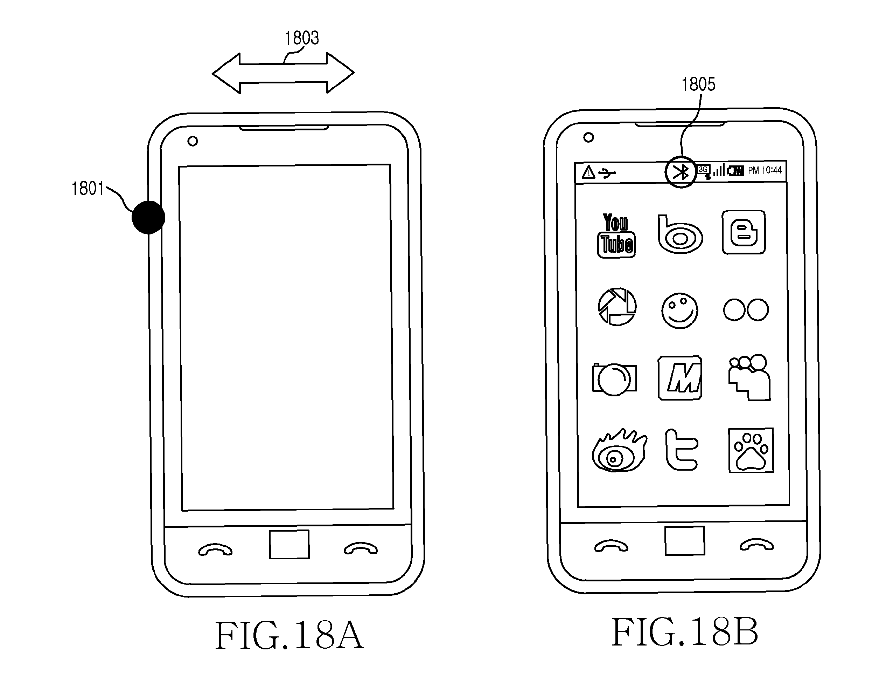

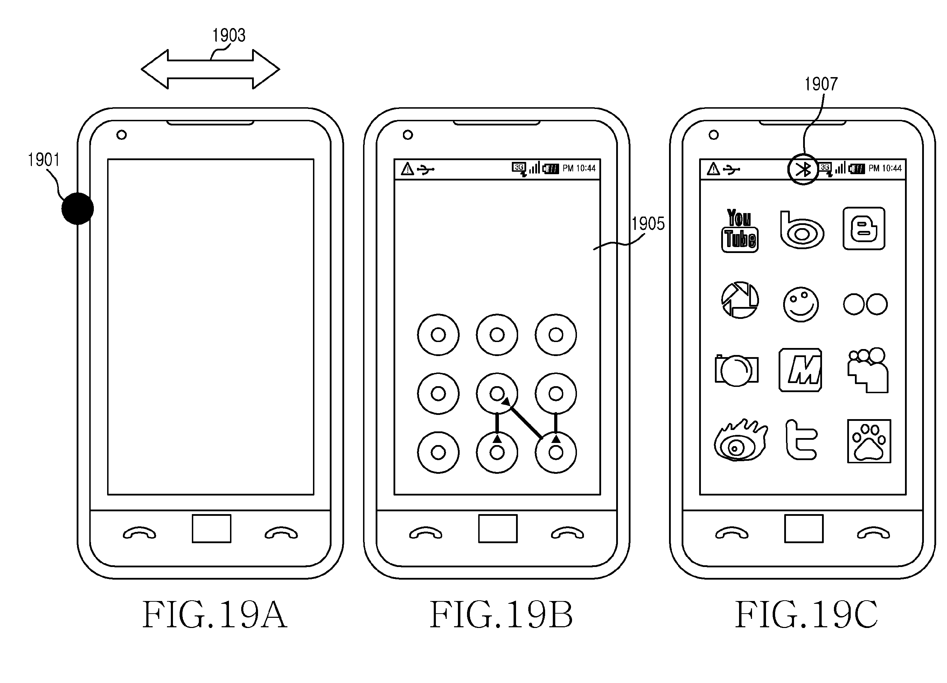

After that, the electronic device proceeds to step 1703 and determines whether a shortcut service button is inputted when it is operating in the standby mode. For example, the electronic device determines whether a volume up button (1801) or (1901) is inputted among at least one shortcut service button as illustrated in FIGURE 18A or FIGURE 19A.

When it is determined in step 1703 that the shortcut service button is not inputted, the electronic device returns to step 1701 and operates in the standby mode.

Alternatively, when it is determined in step 1703 that the shortcut service button is inputted, the electronic device proceeds to step 1705 and determines whether a shortcut service gesture is sensed. For example, the electronic device determines whether a left/right gesture (1803) or (1903) is sensed among at least one shortcut service gesture as illustrated in FIGURE 18A or FIGURE 19A.

When it is determined in step 1705 that the shortcut service gesture is not sensed, the electronic device proceeds to step 1713 and determines whether the shortcut service button input is released.

When it is determined in step 1713 that the shortcut service button input is released, the electronic device recognizes that it does not use a shortcut service. Accordingly, the electronic device terminates the algorithm according to the present invention.

Alternatively, when it is determined in step 1713 that the shortcut service button input is not released, the electronic device returns to step 1705 and again determines whether the shortcut service gesture is sensed.

Alternatively, when it is determined in step 1705 that the shortcut service gesture is sensed, the electronic device proceeds to step 1707 and determines whether it provides a control mode settings shortcut service. For example, the electronic device determines whether a menu for providing the control mode settings shortcut service has been set.

When it is determined in step 1707 that it does not provide the control mode settings shortcut service, the electronic device terminates the algorithm according to the present invention.

Alternatively, when it is determined in step 1707 that it provides the control mode settings shortcut service, the electronic device proceeds to step 1709 and confirms control mode settings mapped to the shortcut service button and the shortcut service gesture.

Next, the electronic device proceeds to step 1711 and applies the control mode settings mapped to the shortcut service button and the shortcut service gesture. Accordingly, the electronic device displays a control mode settings icon mapped to the shortcut service button and the shortcut service gesture, on the display unit 112. For example, when the volume up button (1801) is inputted and the left/right gesture (1803) is sensed as illustrated in FIGURE 18A, the electronic device applies Bluetooth mode settings (1805) mapped to the volume up button (1801) and the left/right gesture (1803) as illustrated in FIGURE 18B. For another example, when the volume up button (1901) is inputted and the left/right gesture (1903) is sensed as illustrated in FIGURE 19A, the electronic device determines whether it provides a privacy protection service. When providing the privacy protection service, the electronic device displays a privacy protection service screen (1905) on the display unit 112 as illustrated in FIGURE 19B. When the privacy protection service is unlocked, the electronic device can apply Bluetooth mode settings (1907) mapped to the volume up button (1901) and the left/right gesture (1903) as illustrated in FIGURE 19C.

Next, the electronic device terminates the algorithm according to the present invention.

In the aforementioned example embodiment, the electronic device confirms control mode settings mapped to a shortcut service button and a shortcut service gesture (step 1709) after determining if it provides a control mode settings shortcut service (step 1707).

In another example embodiment, the electronic device may check if it provides the control mode settings shortcut service (step 1707), after confirming the control mode settings mapped to the shortcut service button and the shortcut service gesture (step 1709).

In certain embodiments, an advantage may be provided in that, when inputs of a shortcut service button and a shortcut service gesture are sensed in an electronic device, executing an application mapped to the shortcut service button and the shortcut service gesture, thereby being configured to easily executing or setting an application desired by a user in the electronic device.

Also, certain embodiments may provide an advantage of, when inputs of a shortcut service button and a shortcut service gesture are sensed in an electronic device, applying control mode settings mapped to the shortcut service button and the shortcut service gesture, thereby being configured to easily apply control mode settings desired by a user in the electronic device.

Embodiments of the present invention according to the claims and description in the specification can be realized in the form of hardware, software or a combination of hardware and software.

Such software may be stored in a non-transient computer readable storage medium. The computer readable storage medium stores one or more programs (software modules), the one or more programs comprising instructions, which when executed by one or more processors in an electronic device, cause the electronic device to perform methods of the present invention.

Such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for providing a shortcut service for service execution in an electronic device, the method comprising:
when a shortcut service button input and a shortcut service gesture are sensed, determining a service mapped to the shortcut service button and the shortcut service gesture; and
executing the service mapped to the shortcut service button and the shortcut service gesture.

2. The method of claim 1, wherein executing the service comprises executing an application mapped to the shortcut service button and the shortcut service gesture.

3. The method of claim 1, wherein executing the service comprises setting a control mode mapped to the shortcut service button and the shortcut service gesture.

4. The method of claim 3, wherein the control mode settings comprise at least one of wireless Internet settings, Bluetooth settings, location-based service settings, and automatic screen rotation settings.

5. The method of claim 1, wherein the shortcut service button comprises at least one hardware button configured to map a service for a shortcut service among at least one hardware button comprised in the electronic device.

6. The method of claim 1, wherein, when the electronic device comprises a touch screen, the shortcut service button comprises at least one software button or at least one icon configured to map a service for a shortcut service among at least one software button and at least one icon configured to be displayed on the touch screen.

7. The method of claim 1, wherein the shortcut service gesture comprises at least one gesture information configured to map a service for a shortcut service among at least one gesture information capable of being sensed in the electronic device.

8. The method of claim 7, wherein the shortcut service gesture comprises at least one of a left/right gesture, an up/down gesture, and a wind blowing gesture.

9. The method of claim 1, wherein executing the service comprises:
when the shortcut service button input and the shortcut service gesture are sensed, determining provision or non-provision of a privacy protection service;
when providing the privacy protection service, determining if the privacy protection service is unlocked; and
when the privacy protection service is unlocked, executing the service mapped to the shortcut service button and the shortcut service gesture.

10. The method of claim 9, further comprising, when not providing the privacy protection service, executing the service mapped to the shortcut service button and the shortcut service gesture.

11. The method of claim 1, wherein executing the service comprises:
when the shortcut service button input and the shortcut service gesture are sensed, determining provision or non-provision of the shortcut service; and
when providing the shortcut service, executing the service mapped to the shortcut service button and the shortcut service gesture.

12. An electronic device configured to provide a shortcut service for service execution, the device comprising:
an input unit comprising at least one button;
a sensing module configured to sense a motion of the electronic device; and
a controller configured to, when a shortcut service button input and a shortcut service gesture are sensed through the input unit and the sensing module, execute a service mapped to the shortcut service button and the shortcut service gesture.

13. The device of claim 12, wherein the controller is configured to executes an application mapped to the shortcut service button and the shortcut service gesture.

14. The device of claim 12, wherein the controller is configured to set a control mode mapped to the shortcut service button and the shortcut service gesture.

15. The device of claim 14, wherein the control mode settings comprise at least one of wireless Internet settings, Bluetooth settings, location-based service settings, and automatic screen rotation settings.
